# FASCICULE DE BREVET EUROPEEN

(11) **EP 4 074 219 B1**
(45) Date de publication et mention de la délivrance du brevet: **17.09.2025**
(21) Numéro de dépôt: 22168557.1
(22) Date de dépôt: 14.04.2022
(51) Int. Cl.: A47B 73/00, A47B 96/02, A47B 88/40, A47B 97/00, F25D 25/02

(54) **ALIMENTATION ÉLECTRIQUE DE CLAYETTES DE CAVE À VIN**
STROMVERSORGUNG FÜR WEINKELLER-REGALE
POWER SUPPLY FOR WINE CELLAR RACKS

(30) Priorité: 16.04.2021 FR 2103944
(43) Date de publication de la demande: 19.10.2022
(73) Titulaire: Frio Entreprise, 72230 Arnage (FR)
(72) Inventeur: GRYCHTA, Didier, 72230 ARNAGE (FR); LIBEAULT, Nicolas, 44100 NANTES (FR); CHEVALIER, Hubert, 49480 SAINT SYLVAIN D'ANJOU (FR)
(74) Mandataire: Cabinet Bleger-Rhein-Poupon

(56) Documents cités:
- EP-A1- 3 161 398
- WO-A1-2016/036015
- WO-A1-2020/141834
- FR-A1- 2 700 913
- US-A1- 2014 126 829

## Description

La présente invention se rapporte à une cave à vin en l'occurrence constituée d'une armoire à température et hygrométrie contrôlées munie de dispositifs de stockage des bouteilles. Les bouteilles rangées dans ce type d'armoires sont maintenues dans des conditions particulières, permettant une conservation optimale de chaque vin en attente de dégustation. Elles remplacent et/ou améliorent les caves anciennement utilisées, et offrent en particulier des capacités de contrôle de l'ambiance de conservation très supérieures aux simples pièces de sous-sols d'habitation qui les ont précédées. Ces armoires, de préférence placées dans des pièces où elles peuvent être mises à l'abri de la lumière, peuvent au surplus bénéficier de technologies actuelles pour la création et la gestion fine d'une ambiance favorable à la conservation des bouteilles. La présente invention a d'ailleurs trait à une cave dite connectée qui bénéficie de nombres d'avancées technologiques pour faciliter son emploi par ses possesseurs. L'état de la technique pertinent est divulgué dans le document EP3161398A1.

Dans ces armoires, dont la façade avant est munie d'une porte d'accès à l'espace de stockage, les bouteilles sont traditionnellement conservées à l'horizontale. Pour minimiser autant les coûts que l'encombrement, il est d'ailleurs prévu de ranger un maximum de bouteilles dans un espace formant l'essentiel du volume intérieur de l'armoire. Les bouteilles sont disposées en rangées dans ledit volume, sur des clayettes superposées qui doivent offrir un rangement et un accès individualisé à un maximum de bouteilles. Chaque clayette est à cet effet équipée d'emplacements de réception d'une pluralité de bouteilles disposées tête-bêche. Ce rangement par clayettes superposées permet d'assurer d'une part la position horizontale desdites bouteilles et d'autre part une circulation d'air permettant une répartition homogène de la température et de l'humidité.

Cette exigence d'optimisation du nombre de bouteilles rangées ne doit évidemment pas s'opposer à la nécessité d'un accès aisé et individualisé à chaque bouteille à extraire, et les clayettes sont donc prévues coulissables. Chaque clayette est donc déplaçable entre deux positions respectivement déployée hors du rack, permettant l'extraction de la bouteille sélectionnée, et rétractée dans le volume de ce dernier.

La cave à vin de l'invention étant dotée de moyens électroniques de signalisation et de détection des emplacements individuels signalant ceux qui sont occupés par une bouteille et ceux qui sont vides, chaque clayette doit dès lors être alimentée électriquement afin de faire fonctionner les composants nécessaires auxdites fonctions avancées de signalisation et de détection. L'alimentation de la cave à vin provient d'une connexion secteur unique, arrivant en un endroit prédéterminé de l'armoire, dont les caractéristiques électriques (courant, tension, etc.) sont ensuite transformées pour pouvoir fournir les signaux forts nécessaires au fonctionnement des divers composants de chaque clayette. Le déplacement par coulissement des clayettes pose à cet égard le problème de la mobilité de l'unité à alimenter, qui ne doit pas se faire au détriment de la qualité de connexion.

Il est certes possible de faire partir d'une connexion centralisée des câbles conducteurs souples acheminant l'énergie électrique à chaque clayette, en utilisant un montage de type « pieuvre », mais cette solution présente de nombreux inconvénients. Prévoir un câble par clayette signifie dans ce cas qu'il y aura une pluralité de câbles de longueurs différentes dans le volume intérieur de l'armoire, inesthétique, coûteux si l'on additionne la totalité des longueurs, et dont la présence peut de plus s'avérer problématique car leur foisonnement est susceptible d'entraver les déplacements des clayettes. Une organisation en faisceaux pour éviter une présence désordonnée dans le volume de l'armoire conduit en général à une flexibilité moindre, avec le risque de rendre plus difficile la manipulation des clayettes par l'utilisateur, notamment lorsqu'elles sont repoussées dans l'espace intérieur. Par ailleurs, dans l'environnement propre à une cave à vin, l'installation d'un faisceau de câbles électriques à proximité de l'évaporateur du circuit frigorifique impose des contraintes.

Enfin, s'ils restent individualisés, et qu'ils pendent dans l'espace intérieur au voisinage des clayettes, les câbles sont potentiellement plus sujets à des déconnexions ou arrachements intempestifs. Il est à noter que les câbles de connexion des clayettes distales de l'alimentation, qui présentent la plus grande longueur, concentrent un peu tous les inconvénients mentionnés ci-dessus. Les risques d'emmêlement des câbles avec les clayettes, ou d'accrochage avec des bouteilles ou d'autres obstacles, bien que toujours présents, sont évidemment plus importants pour les câbles les plus longs.

L'invention remédie à ces multiples limitations et problématiques en proposant une solution d'alimentation optimisée avec notamment un câblage uniforme, quel que soit l'emplacement de la clayette dans l'armoire constituant la cave à vin. Cette solution optimise au surplus la longueur uniformisée des câbles de connexion et permet de contrôler très précisément leur positionnement par rapport à la clayette qu'ils alimentent, quel que soit par ailleurs le positionnement de la clayette par rapport à l'armoire. Enfin, les câbles d'alimentation ne sont plus visibles à l'utilisateur, ils sont gérés par le système de manière à être en quelque sorte « rangés » à chaque instant, indépendamment des déplacements de la clayette.

Ainsi, selon l'invention, l'alimentation électrique desdits moyens électroniques de détection et desdits moyens électroniques de visualisation provient d'une unique alimentation centralisée dans l'armoire et alimentant deux conducteurs verticaux placés à l'intérieur d'une paroi de l'armoire, chaque clayette étant électriquement reliée via un câble de raccordement flexible à des moyens de connexion dudit câble aux conducteurs verticaux, ces moyens de connexion étant disposés au niveau de la clayette sur la face intérieure de ladite paroi. De plus, ledit câble de raccordement flexible présente une longueur suffisante pour assurer le raccordement lorsque la clayette est déployée, et chaque clayette est dotée de moyens élastiques aptes à maintenir le câble tendu en permanence, quelle que soit la position de la clayette.

En d'autres termes, la solution proposée par l'invention gère le déplacement de câbles flexibles de raccordement identiques, ladite gestion s'effectuant de sorte qu'ils soient continument et en permanence sous contrôle, quels que soient par ailleurs les déplacements imprimés auxdites clayettes. Ces câbles de liaison individuels sont, du fait de la double distribution de l'alimentation d'abord d'allure verticale puis d'allure horizontale, de longueur minimale et calibrés pour n'alimenter qu'une clayette, celle qui se situe au niveau des moyens de connexion du câble à la distribution verticale de l'alimentation. Lesdits moyens de connexion sont en pratique distribués le long d'une des parois latérales de l'armoire.

Selon l'invention, les moyens élastiques consistent en un tendeur élastique allongé présentant une boucle d'extrémité dans laquelle passe le câble de raccordement, divisant angulairement ce dernier en un premier tronçon allant des moyens de connexion à la boucle d'extrémité du tendeur et un second tronçon allant de ladite boucle d'extrémité à un point d'attache du câble flexible à la clayette, les deux tronçons formant ensemble une longueur de câble permettant de maintenir le raccordement lorsque la clayette est déployée, le tendeur étant fixé à la clayette à son extrémité opposée à la boucle.

Le tendeur grandit élastiquement lorsque la clayette est déployée, car le câble de connexion exerce une traction au niveau de la boucle d'extrémité à mesure que l'angle formé par les tronçons du câble flexible devient plus obtus. Lorsque la clayette est complètement refermée, cet angle est au contraire très aigu, les deux tronçons devenant presque parallèles et l'un d'eux étant sensiblement au contact de la clayette. Ces tronçons, du fait que les moyens de connexion sont situés au niveau de la clayette et que le tendeur est fixé à ladite clayette, sont en pratique situés dans le volume couvert par le déplacement de la clayette, plus exactement dans le volume compris entre les plans inférieur et supérieur enveloppant la clayette horizontale.

De préférence, les moyens de connexion du câble flexible aux conducteurs verticaux sont placés au voisinage d'une arête de coin de l'armoire séparant la paroi de fond de l'armoire située à l'opposé de la porte et une paroi latérale, au niveau des conducteurs verticaux, et le tendeur est fixé sur la traverse arrière de la clayette située en regard de ladite paroi de fond, au voisinage de l'arête de coin opposée.

Dans ce cas, le câble de connexion devient invisible lorsque la clayette est rétractée, puisqu'il ne pend pas du fait de la tension élastique procurée par le tendeur et parce qu'il se situe dans l'empreinte volumique d'allure horizontale de la clayette lorsqu'elle se déplace, et en partie arrière de celle-ci.

De préférence encore, les conducteurs verticaux sont des barres conductrices placées à l'intérieur d'une paroi latérale de l'armoire. Cette alimentation par conductivité dans des barres métalliques moulées dans la paroi permet de simplifier considérablement la distribution électrique à destination des clayettes. Chaque clayette bénéficie ainsi d'une alimentation par exemple de 5V et 3A continus, adaptée à l'électronique qui réside dans chaque clayette, qui sera mentionnée plus en détail dans la suite.

A l'une des extrémités du câble de raccordement, les moyens de connexion du câble aux barres verticales consistent par exemple en des vis conductrices passant par des œillets équipant le bout de conducteurs émergeant d'une gaine à une première extrémité libre du câble flexible, lesdites vis conductrices traversant la paroi de l'armoire en direction des barres conductrices munies d'orifices filetés, barres dans lesquelles elles sont vissées.

Selon une configuration possible de l'invention, les moyens de connexion du câble de raccordement flexible peuvent comporter un cache en matériau isolant recouvrant les œillets et muni d'un système de fixation de l'extrémité du câble flexible de raccordement, ledit cache étant fixé à la face interne de la paroi au moyen des vis conductrices.

Le câble flexible est donc assujetti au cache isolant, ce qui permet d'éviter toute traction intempestive au niveau des œillets réalisant la connexion électrique. La solution utilisée permet la fixation mécanique du cache et des œillets par l'intermédiaire d'un composant conducteur qui remplit donc une seconde fonction électrique de connexion. Selon une configuration possible, le système de fixation du câble de raccordement flexible au cache isolant consiste en des reliefs intérieurs du cache comprenant un étrier constituant un clip d'accrochage élastique d'une première bague surmoulée à l'extérieur de la gaine du câble flexible entourant les fils constitutifs dudit câble.

Le câble flexible de raccordement est par ailleurs solidarisé à la clayette par des moyens d'attache placés au niveau de la traverse supportant le tendeur. Ces moyens d'attache à la clayette peuvent par exemple consister en un clip fixé à la clayette et apte à clipser élastiquement une seconde bague surmoulée équipant la gaine du câble flexible de raccordement. Là encore, l'objectif est d'éviter de modifier l'organisation de la solidarisation du câble à la clayette, qui est importante dans la logique mécanique mise en œuvre pour assurer la tension permanente du câble.

De fait, le câble flexible de raccordement peut n'être prévu que pour relier l'alimentation de la cave à vin à l'arrière de chaque clayette, et ne pas prendre en charge l'alimentation des fonctions électroniques prévues sur la clayette. Il doit dans cette hypothèse avoir une longueur un peu supérieure à la distance séparant la clayette déployée des barres d'alimentation. Selon l'invention, le câble peut alors être équipé d'un connecteur situé à une seconde extrémité libre et à proximité de la seconde bague surmoulée, coopérant avec un connecteur fixé à la clayette au voisinage du clip.

D'autres buts et avantages de la présente invention apparaîtront au cours de la description qui va suivre se rapportant à un mode de réalisation qui n'est donné qu'à titre d'exemple indicatif et non limitatif.

La compréhension de cette description sera notamment facilitée en se référant aux dessins joints en annexe et dans lesquels :
La figure 1 représente une vue en perspective éclatée d'une clayette selon l'invention, dont les composants permettant la gestion de la tension du câble de raccordement flexible sont montrés agrandis.
La figure 2 montre une vue en élévation d'un tel câble de raccordement flexible.
La figure 3 illustre en vue perspective le fonctionnement de la gestion de la tension du câble flexible de raccordement.
La figure 4 représente en vue perspective l'intérieur du cache en matériau isolant.
La figure 5 montre une vue en perspective d'une partie de paroi latérale sur laquelle les caches sont dans le prolongement arrière des glissières de coulissement des clayettes.
La figure 6 montre la même vue, du côté opposé, c'est-à-dire depuis la paroi latérale.

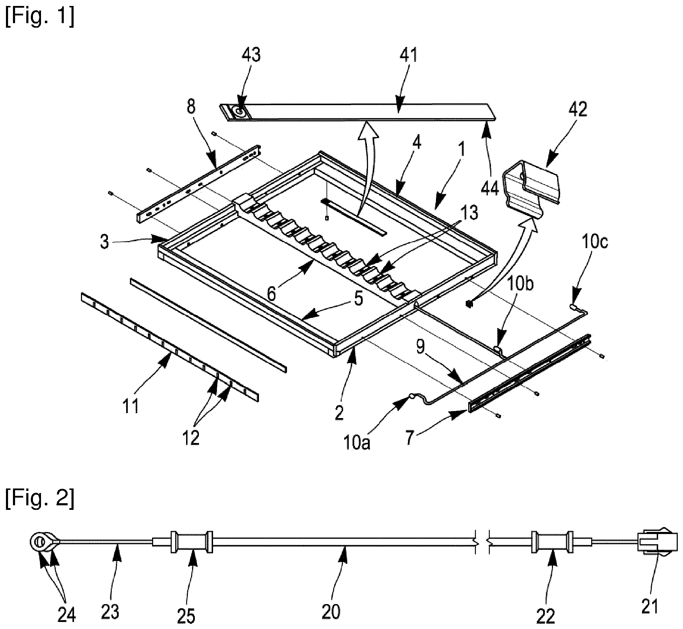

En référence à la figure 1, la clayette 1 comporte très généralement deux longerons 2, 3, deux traverses 4, 5 et une barre centrale 6 conformée pour loger des bouteilles. Les longerons 2, 3 sont munis de rails 7, 8 qui y sont vissés et permettent leur coulissement dans des coulisses équipant les parois latérales de l'armoire de la cave à vin (non représentées). Le longeron 2 comporte de plus un câble de connexion 9 interne équipé de trois connecteurs 10a, 10b et 10c permettant de distribuer tension et courant électriques continus à des circuits internes assurant les fonctions électroniques mentionnées auparavant. Ces signaux de tension/courant sont fournis à la clayette 1 par l'alimentation de l'armoire via le câble de raccordement flexible 20 montré en figure 2.

Le connecteur 10a permet ainsi d'alimenter, par raccordement à un circuit imprimé qui la gère, une barre 11 de diodes électroluminescentes 12 qui signalent la présence de bouteilles dans les emplacements conformés dans la barre centrale 6. Cette barre 11 de diodes 12 équipe la traverse 5 située à l'avant de la clayette 1, celle qui se situe par conséquent à proximité de la porte de l'armoire et est visible par les utilisateurs. Le connecteur 10b alimente également un circuit imprimé placé dans la barre centrale 6 et qui gère des détecteurs 13 de présence des bouteilles. Le troisième connecteur 10c permet le raccordement à un connecteur 21 du câble flexible 20 de la figure 2. C'est par lui que se fait la connexion à l'alimentation centralisée de la cave à vin de l'invention.

La traverse 4, qui est par conséquent la traverse arrière de la clayette, dès lors placée en regard de la paroi de fond de l'armoire et distale de la porte, comporte deux composants spécifiques qui permettent la gestion du câble flexible de raccordement 20 par rapport à la clayette 1 et qui sont agrandis par rapport à l'échelle du reste de la figure 1 : le tendeur 41 et un clip de fixation 42 du câble flexible 20 de raccordement.

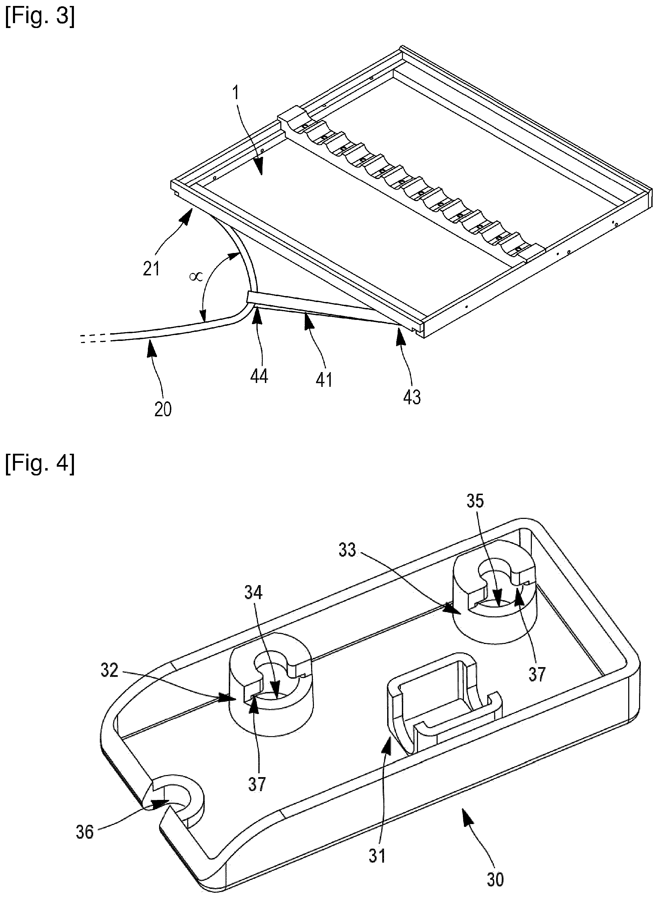

Le tendeur 41 est fixé au voisinage de l'une des extrémités de la traverse 4 via une vis traversant un œillet 43. Le clip 42 est également fixé via une vis, au voisinage de l'autre extrémité de la traverse 4. Les deux points de fixation sont d'ailleurs de préférence localisés sur la même face de la traverse 4. Le tendeur 41 est en réalité une bande élastique dont les extrémités libres sont fixées l'une à l'autre au niveau de l'œillet 43. L'extrémité du tendeur 41 qui ne comporte pas l'œillet 43 présente une boucle 44 dans laquelle le câble flexible 20 est glissé, comme représenté en figure 3. C'est au niveau de cette boucle 44 que l'effort de rappel exercé par le tendeur 41 élastique sur le câble 20 s'effectue. Les caractéristiques de ce tendeur 41 peuvent par exemple être les suivantes : il peut être composé de 50% de polyester et de 50% de latex.

La gaine du câble flexible 20 de raccordement présente, au voisinage de son connecteur d'extrémité 21, un surmoulage en forme de bague 22 prévu pour se clipser élastiquement dans le clip 42 lorsque les connecteurs 21 et 10c sont reliés. Ce clipsage assujettit le câble flexible 20 à la traverse 4 de la clayette 1, à l'emplacement choisi pour le bon fonctionnement du système mécanique, et il empêche au surplus tout arrachement susceptible d'endommager le connecteur 21, voire le connecteur 10c. Dans la représentation de la figure 3, la connexion et le clipsage de la bague 22 surmoulée sur la gaine du câble 20 dans le clip 42 sont sur une face inférieure de la traverse 4 non visible sur la figure, qui illustre une perspective vue du haut de la clayette 1. De même, la fixation du tendeur 41, via l'œillet 43, à l'autre extrémité de ladite traverse 4 n'est pas visible non plus.

Comme il ressort de la figure 2, à l'autre extrémité du câble de raccordement 20, la gaine s'interrompt pour laisser sortir des conducteurs 23 individualisés auxquels sont soudés des œillets 24. Ceux-ci permettent une fixation par vissage de l'extrémité correspondante du câble flexible 20 aux barres de distribution de l'électricité équipant comme évoqué une paroi par exemple latérale de l'armoire. Cette fixation se fait via un cache isolant 30 (voir en figure 4) lui-même fixé à ladite paroi par les mêmes vis, et dont la face interne comporte des reliefs définissant un clip de solidarisation d'une seconde bague surmoulée 25 équipant l'autre extrémité libre du câble flexible 20, empêchant ainsi qu'une traction ou toute contrainte intempestive puisse endommager le câble flexible 20 ou couper la connexion électrique.

Plus précisément, le cache isolant 30 comporte, à l'intérieur du volume qu'il délimite, un étrier 31 dans lequel se clipse la bague surmoulée 25, qui s'y trouve par conséquent fermement attachée. Une encoche 36 pratiquée dans l'une des bordures du cache 30 permet le passage du câble 20, en amont de ladite bague 25, pour ne pas entraver la fixation du cache 30 au contact de la paroi de l'armoire. Le cache 30 comporte par ailleurs deux orifices 34, 35 pour le passage des vis conductrices de fixation à ladite paroi, orifices qui sont entourés de canons 32, 33 de guidage tronqués, une portion de la paroi périphérique de l'extrémité interne des canons 32, 33 étant manquante. L'absence de paroi à cet endroit permet d'insérer les œillets 24 dans les canons 32, 33, perpendiculairement à leur axe, de sorte qu'ils puissent être positionnés sensiblement coaxiaux auxdits canons 32, 33, c'est-à-dire également coaxiaux aux vis de fixation. Une fente 37 est d'ailleurs prévue à cet effet, d'épaisseur du même ordre que celle de l'œillet 24, de sorte que lorsqu'il y est inséré, il ne peut bouger de la position centrée dans le canon 32, 33. Le contact avec la vis qui le traverse est donc assuré.

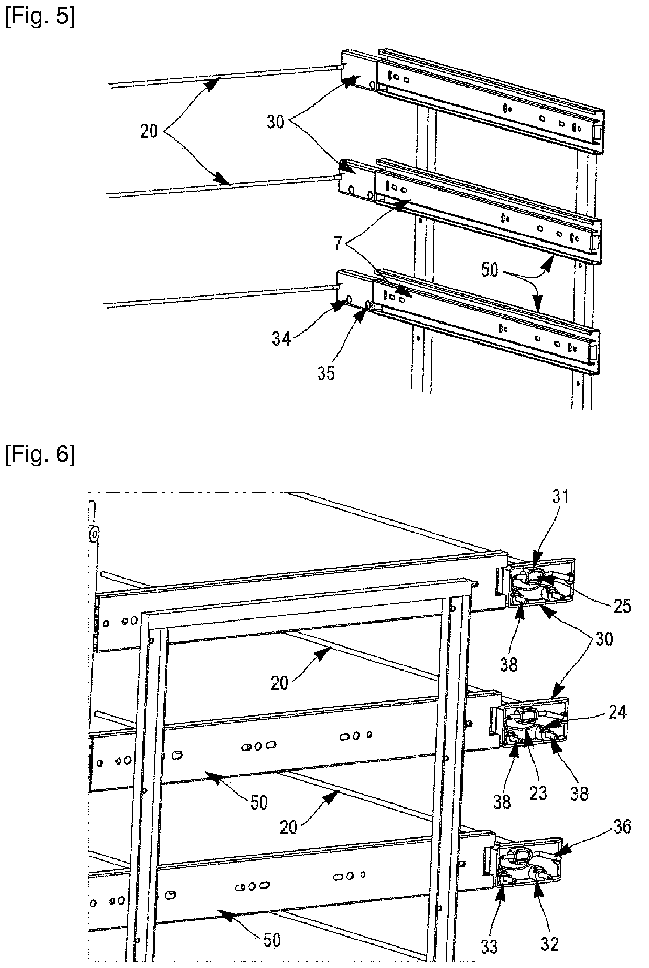

Les figures 5 et 6 montrent où et comment ces caches 30 sont installés dans la cave à vin de l'invention. Ainsi, ils sont positionnés dans le prolongement des glissières des clayettes 1, c'est-à-dire dans la suite des rails 7 montés coulissant dans des coulisses 50 attachées aux parois latérales. Les caches 30 sont en l'espèce placés à l'arrière desdites glissières, au voisinage de l'arête de coin entre la paroi latérale et la paroi de fond de l'armoire, à l'opposé de la porte de façade. La figure 5 montre plus particulièrement l'emplacement des orifices 34, 35 d'insertion des vis 38 de fixation (voir en figure 6) conductrices des caches 30 à la paroi.

Comme visible en figure 6, la partie d'extrémité du câble flexible 20 qui est logée dans le cache 30 entre dans le volume intérieur dudit cache 30 via l'encoche d'allure circulaire 36. La bague surmoulée 25 de la gaine du câble flexible 20 est clipsée dans l'étrier 31, de sorte que tout risque d'arrachement est écarté. Les œillets 24 terminant les conducteurs 23 sont insérés dans les fentes 37 (voir en figure 4) et par conséquent centrés dans les canons 32, 33 de guidage des vis 38 conductrices de fixation aux barres d'alimentation verticales.

Le fonctionnement, aisé à comprendre en référence à la figure 3, est le suivant : lorsque la clayette 1 est tirée vers l'extérieur, le câble flexible 20 se tend et la valeur de l'angle α augmente, de même que la longueur du tendeur 41 dans la direction du déplacement de la clayette 1. Le câble 20 est donc prévu d'une longueur totale permettant de sortir la clayette 1 jusqu'à sa butée de sortie, c'est-à-dire complètement déployée. Dès lors que la clayette 1 est rentrée dans le volume de l'armoire, le tendeur 41 exerce une force de rappel sur le coude du câble flexible 20 de raccordement, l'angle α diminue et le tronçon dudit câble 20 situé entre le tendeur 41 et la traverse 4 est entraîné vers ladite traverse. En position totalement rétractée de la clayette 1, les deux tronçons du câble 20 de part et d'autre de la boucle 44 du tendeur 41 sont pratiquement parallèles, quasi au contact de la traverse arrière 4, et totalement invisibles pour l'utilisateur.

La solution permet de garantir un fonctionnement optimal de la gestion de l'alimentation de la pluralité de clayettes 1 superposées, sans entraver leur déplacement.

L'exemple donné ci-dessus en référence aux figures annexées n'est pas exhaustif ni limitatif de l'invention, qui englobe notamment les variantes de forme tels que définis par les revendications pour le tendeur 41, le clip 42, ainsi que des variantes de composition du tendeur 41, etc.

## Revendications

1. Cave à vin comportant une armoire dont la façade est munie d'une porte, le volume intérieur de l'armoire comportant des clayettes (1) coulissables superposées, chaque clayette (1) étant déplaçable entre deux positions respectivement déployée hors du volume intérieur et rétractée dans ledit volume intérieur, chaque clayette (1) étant équipée d'emplacements de réception d'une pluralité de bouteilles, de moyens électroniques de détection (13) de la présence d'une bouteille en chaque emplacement et de moyens électroniques de visualisation (12) de l'occupation de chaque emplacement, l'alimentation électrique desdits moyens électroniques de détection (13) et desdits moyens électroniques de visualisation (12) provenant d'une unique alimentation centralisée dans l'armoire, chaque clayette (1) étant électriquement reliée via un câble de raccordement (20) flexible à des moyens de connexion dudit câble (20) à l'alimentation, lesdits moyens de connexion étant disposés au niveau de la clayette (1) sur la face intérieure de ladite paroi, ledit câble de raccordement (20) flexible présentant une longueur suffisante pour assurer le raccordement lorsque la clayette (1) est déployée, et chaque clayette (1) étant dotée de moyens élastiques (41) aptes à maintenir le câble (20) tendu en permanence, quelle que soit la position de la clayette (1), **caractérisée en ce que** l'unique alimentation alimente deux conducteurs verticaux placés à l'intérieur d'une paroi de l'armoire, les moyens de connexion du câble de raccordement (20) flexible étant reliés aux deux conducteurs verticaux, et **en ce que** les moyens élastiques consistent en un tendeur élastique (41) allongé présentant une boucle d'extrémité (44) dans laquelle passe le câble de raccordement (20), divisant angulairement ce dernier en un premier tronçon allant des moyens de connexion à la boucle d'extrémité (44) du tendeur (41) et un second tronçon allant de ladite boucle d'extrémité (44) à un point d'attache du câble (20) flexible à la clayette (1), les deux tronçons formant ensemble une longueur de câble (20) permettant de maintenir le raccordement lorsque la clayette (1) est déployée, le tendeur (41) étant fixé à la clayette (1) à son extrémité opposée à la boucle (44).

2. Cave à vin selon la revendication précédente, **caractérisée en ce que** les moyens de connexion du câble (20) flexible aux conducteurs verticaux sont placés au voisinage d'une arête de coin de l'armoire séparant la paroi de fond de l'armoire située à l'opposé de la porte et une paroi latérale, au niveau des conducteurs verticaux, et le tendeur (41) est fixé sur la traverse arrière 4 de la clayette (1) située en regard de ladite paroi de fond, au voisinage de l'arête de coin opposée.

3. Cave à vin selon l'une quelconque des revendications précédentes, **caractérisée en ce que** les conducteurs verticaux sont des barres conductrices placées à l'intérieur d'une paroi latérale de l'armoire.

4. Cave à vin selon la revendication précédente, **caractérisée en ce que** les moyens de connexion du câble (20) aux barres verticales consistent en des vis (38) conductrices passant par des œillets (24) équipant le bout de conducteurs (23) émergeant d'une gaine à un première extrémité libre du câble (20) flexible, lesdites vis (38) conductrices traversant la paroi de l'armoire en direction des barres conductrices munies d'orifices filetés, barres dans lesquelles elles sont vissées.

5. Cave à vin selon la revendication précédente, **caractérisée en ce que** les moyens de connexion du câble de raccordement (20) flexible comportent un cache (30) en matériau isolant recouvrant les œillets (24) et muni d'un système de fixation de l'extrémité du câble (20) flexible de raccordement, ledit cache (30) étant fixé à la face interne de la paroi au moyen des vis (38) conductrices.

6. Cave à vin selon la revendication précédente, **caractérisée en ce que** le système de fixation du câble de raccordement (20) flexible au cache isolant consiste en des reliefs intérieurs du cache (30) comprenant un étrier (31) constituant un clip d'accrochage élastique d'une première bague (25) surmoulée à l'extérieur de la gaine du câble (20) flexible entourant les fils (23) constitutifs dudit câble (20).

7. Cave à vin selon l'une des revendications 1 à 5, **caractérisée en ce que** le câble (20) flexible de raccordement est solidarisé à la clayette (1) par des moyens d'attache (42) placés au niveau de la traverse (4) supportant le tendeur (41).

8. Cave à vin selon la revendication précédente, **caractérisée en ce que** les moyens d'attache à la clayette (1) consistent en un clip (42) fixé à la clayette (1) et apte à clipser élastiquement une seconde bague (22) surmoulée équipant la gaine du câble (20) flexible de raccordement.

9. Cave à vin selon la revendication précédente, **caractérisée en ce que** le câble (20) flexible de raccordement est équipé d'un connecteur (21) situé à une seconde extrémité libre et à proximité de la seconde bague (22) surmoulée, coopérant avec un connecteur (10c) fixé à la clayette (1) au voisinage du clip (42).

## Patentansprüche

1. Weinkeller aufweisend einen Schrank, dessen Vorderseite mit einer Tür versehen ist, wobei
das Innenvolumen des Schranks übereinander angeordnete ausziehbare Regale (1) aufweist,
jedes Regal (1) zwischen zwei Positionen, nämlich einer aus dem Innenvolumen herausgeschobenen Position und einer in das Innenvolumen hineingeschobenen Position, verschiebbar ist,
jedes Regal (1) mit Aufnahmeplätzen zum Aufnehmen mehrerer Flaschen, mit elektronischen Detektionseinrichtungen (13) zum Detektieren des Vorhandenseins einer Flasche an jedem Platz und mit elektronischen Visualisierungseinrichtungen (12) zum Visualisieren der Belegung jedes Platzes ausgestattet ist,
die elektrische Versorgung der Detektionseinrichtungen (13) und der Visualisierungseinrichtungen (12) aus einer einzigen zentralen Versorgung in dem Schrank stammt,
jedes Regal (1) via ein flexibles Verbindungskabel (20) elektrisch mit Anschlusseinrichtungen zum Anschließen des Kabels (20) an die Versorgung verbunden ist,
die Anschlusseinrichtungen in Höhe des Regals (1) auf der Innenfläche der Wand angeordnet sind,
das flexible Verbindungskabel (20) eine Länge hat, die ausreicht, um die Verbindung sicherzustellen, wenn das Regal (1) herausgeschoben ist, und
jedes Regal (1) mit elastischen Einrichtungen (41) versehen ist, die fähig sind, das Kabel (20) dauerhaft in jeder beliebigen Position des Regals (1) gespannt zu halten,
**dadurch gekennzeichnet, dass**
die einzige Versorgung zwei vertikale Leiter versorgt, die im Innern einer Wand des Schranks angeordnet sind,
die Anschlusseinrichtungen zum Anschließen des flexiblen Verbindungskabels (20) mit den zwei vertikalen Leitern verbunden sind, und
dadurch, dass
die elastischen Einrichtungen aus einem länglichen elastischen Spannelement (41) bestehen, das eine Endschlaufe (44) hat, durch die das Verbindungskabel (20) hindurchgeht und die das Verbindungskabel (20) in einen ersten Abschnitt von den Anschlusseinrichtungen zu der Endschlaufe (44) des Spannelements (41) und einen zweiten Abschnitt von der Endschlaufe (44) zu einem Befestigungspunkt des flexiblen Kabels (20) an dem Regal (1) angular unterteilt,
die zwei Abschnitte zusammen eine Länge des Kabels (20) bilden, die erlaubt, die Verbindung aufrechtzuerhalten, wenn das Regal (1) herausgeschoben wird,
wobei das Spannelement (41) mit seinem der Schlaufe (44) entgegengesetzten Ende an dem Regal (1) befestigt ist.

2. Weinkeller nach dem vorstehenden Anspruch, **dadurch gekennzeichnet, dass** die Anschlusseinrichtungen zum Anschließen des flexiblen Kabels (20) an die vertikalen Leiter in der Nähe einer Eckkante des Schranks angeordnet sind, die die der Tür gegenüberliegende Rückwand des Schranks und eine Seitenwand, in Höhe der vertikalen Leiter, trennt, und das Spannelement (41) an dem der Rückwand gegenüberliegenden hinteren Querbalken (4) des Regals (1) in der Nähe der entgegengesetzten Eckkante befestigt ist.

3. Weinkeller nach einem der vorstehenden Ansprüche, **dadurch gekennzeichnet, dass** die vertikalen Leiter leitfähige Stäbe sind, die im Innern einer Seitenwand des Schranks angeordnet sind.

4. Weinkeller nach dem vorstehenden Anspruch, **dadurch gekennzeichnet, dass** die Anschlusseinrichtungen zum Anschließen des Kabels (20) an die vertikalen Stäbe aus leitfähigen Schrauben (38) bestehen, die durch Ösen (24) hindurchgehen, mit denen das Ende von Leitern (23) versehen sind, die an einem ersten freien Ende des flexiblen Kabels (20) aus einer Ummantelung herausragen, wobei die leitfähigen Schrauben (38) sich durch die Wand des Schranks hin zu den mit Gewindebohrungen versehenen leitfähigen Stäben erstrecken, in die sie eingeschraubt sind.

5. Weinkeller nach dem vorstehenden Anspruch, **dadurch gekennzeichnet, dass** die Anschlusseinrichtungen zum Anschließen des flexiblen Verbindungskabels (20) eine Abdeckung aus einem isolierenden Material aufweisen, die die Ösen (24) abdeckt und mit einem System zum Befestigen des Endes des flexiblen Verbindungskabels (20) versehen ist, wobei die Abdeckung (30) mithilfe der leitfähigen Schrauben (38) an der Innenfläche der Wand befestigt ist.

6. Weinkeller nach dem vorstehenden Anspruch, **dadurch gekennzeichnet, dass** das System zum Befestigen des flexiblen Verbindungskabels (20) an der isolierenden Abdeckung aus Innenreliefs der Abdeckung (30) besteht, die einen Bügel (31) aufweisen, der eine Klammer zum elastischen Einhängen eines ersten Rings (25) bildet, der an die Außenseite der die Drahtkomponenten des Kabels (20) umgebenden Ummantelung des flexiblen Kabels (20) überformt ist.

7. Weinkeller nach einem der Ansprüche 1 bis 5, **dadurch gekennzeichnet, dass** das flexible Verbindungskabel mithilfe von Befestigungseinrichtungen (42), die im Bereich des das Spannelement (41) tragenden Querbalkens (4) angeordnet sind, an dem Regal (1) befestigt ist.

8. Weinkeller nach dem vorstehenden Anspruch, **dadurch gekennzeichnet, dass** die Befestigungseinrichtungen zum Befestigen an dem Regal (1) aus einer Klammer (42) bestehen, die an dem Regal (1) angebracht ist und eingerichtet ist, einen zweiten überformten Ring (22) elastisch zu klammern, mit dem die Ummantelung des flexiblen Verbindungskabels (20) versehen ist.

9. Weinkeller nach dem vorstehenden Anspruch, **dadurch gekennzeichnet, dass** das flexible Verbindungskabel (20) mit einem Verbindungsstück (21) versehen ist, das an einem zweiten freien Ende und in der Nähe des zweiten überformten Rings (22) angeordnet ist und mit einem Verbindungsstück (10c), das an dem Regal (1) in der Nähe der Klammer (42) angebracht ist, zusammenwirkt.

## Claims

1. Wine cooler consisting of a cabinet, the front façade of which is provided with a door, the internal volume of the cabinet comprising superimposed sliding racks (1), each rack (1) being movable between two positions respectively deployed outside the internal volume and retracted into said internal volume, each rack (1) being equipped with reception spaces for a plurality of bottles, electronic detection means (13) for the presence of a bottle in each space, and electronic viewing means (12) for the occupation of each location, the power supply of said electronic detection means (13) and said electronic viewing means (12) coming from a single centralised power supply in the cabinet, each rack (1) being electrically connected via a flexible connection cable (20) to means for connecting said cable (20) to the power supply, said connection means being disposed in the rack (1) on the inner side of said wall, said flexible connection cable (20) having a length sufficient to ensure the connection when the rack (1) is deployed, and each rack (1) being provided with elastic means (41) capable of maintaining the cable (20) permanently taut, regardless of the position of the rack (1), **characterised in that** the single power supply supplies two vertical conductors placed inside a wall of the cabinet, the connection means of the flexible connection cable (20) being connected to the two vertical conductors, and **in that** the elastic means consist of an elongated elastic tensioner (41) having an end loop (44) through which the connection cable (20) passes, angularly dividing the connection cable into a first section from the connection means to the end loop (44) of the tensioner (41), and a second section from said end loop (44) to a point of attachment of the flexible cable (20) to the rack (1), the two sections together forming a length of cable (20) enabling the connection to be maintained when the rack (1) is deployed, the tensioner (41) being attached to the rack (1) at its end opposite the loop (44).

2. Wine cooler according to the preceding claim, **characterised in that** the means for connecting the flexible cable (20) to the vertical conductors are placed in the vicinity of a corner edge of the cabinet separating the bottom wall of the cabinet located opposite the door and a side wall, at the vertical conductors, and the tensioner (41) is fastened to the rear cross member 4 of the rack (1) located opposite said bottom wall, in the vicinity of the opposite corner edge.

3. Wine cooler according to any one of the preceding claims, **characterised in that** the vertical conductors are conductive bars placed inside a side wall of the cabinet.

4. Wine cooler according to the preceding claim, **characterised in that** the means for connecting the cable (20) to the vertical bars consist of conductive screws (38) passing through eyelets (24) equipping the end of conductors (23) emerging from a sheath at a first free end of the flexible cable (20), said conductive screws (38) passing through the wall of the cabinet towards the conductive bars provided with threaded holes, into which bars they are screwed.

5. Wine cooler according to the preceding claim, **characterised in that** the means for connecting the flexible connection cable (20) include a cover (30) made of insulating material covering the eyelets (24) and provided with a system for fastening the end of the flexible connection cable (20), said cover (30) being fastened to the inner face of the wall by means of the conductive screws (38).

6. Wine cooler according to the preceding claim, **characterised in that** the system for fastening the flexible connection cable (20) to the insulating cover consists of internal reliefs of the cover (30) comprising a bracket (31) constituting an elastic clip for attaching a first ring (25) overmoulded on the outside of the sheath of the flexible cable (20) surrounding the wires (23) constituting said cable (20).

7. Wine cooler according to any one of claims 1 to 5, **characterised in that** the flexible connection cable (20) is secured to the rack (1) by fastening means (42) placed at the cross member (4) supporting the tensioner (41).

8. Wine cooler according to the preceding claim, **characterised in that** the fastening means to the rack (1) consist of a clip (42) attached to the rack (1) and capable of elastically clipping a second overmoulded ring (22) equipping the sheath of the flexible connection cable (20).

9. Wine cooler according to the preceding claim, **characterised in that** the flexible connection cable (20) is equipped with a connector (21) located at a second free end and near the second overmoulded ring (22), cooperating with a connector (10c) fastened to the rack (1) in the vicinity of the clip (42).
